# EUROPÄISCHE PATENTSCHRIFT

(11) **EP 4 003 815 B1**
(45) Veröffentlichungstag und Bekanntmachung des Hinweises auf die Patenterteilung: **16.10.2024**
(21) Anmeldenummer: 20732196.9
(22) Anmeldetag: 10.06.2020
(51) Int. Cl.: B62D 25/08, B62D 25/04, B62D 25/20, B62D 27/02, B60K 1/04, B62D 25/02

(54) **KAROSSERIESTRUKTUR FÜR EIN ELEKTRISCH BETRIEBENES FAHRZEUG**
BODY STRUCTURE FOR AN ELECTRICALLY OPERATED VEHICLE
STRUCTURE DE CARROSSERIE POUR VÉHICULE À FONCTIONNEMENT ÉLECTRIQUE

(30) Priorität: 25.07.2019 DE 102019211103
(43) Veröffentlichungstag der Anmeldung: 01.06.2022
(73) Patentinhaber: Volkswagen Aktiengesellschaft, 38436 Wolfsburg (DE)
(72) Erfinder: ROSE, Stephan, 38553 Wasbüttel (DE); KRAUTH, Werner, 38442 Wolfsburg (DE)
(86) Internationale Anmeldenummer: PCT/EP2020/066019
(87) Internationale Veröffentlichungsnummer: WO 2021/013428

(56) Entgegenhaltungen:
- DE-A1- 102020 205 576
- DE-A1- 102020 205 713
- US-A1- 2009 146 462
- US-A1- 2013 088 044
- US-A1- 2014 338 999
- US-B1- 7 469 957
- US-B2- 9 296 426

## Beschreibung

Die Erfindung betrifft eine Karosseriestruktur für ein elektrisch betriebenes Fahrzeug nach dem Oberbegriff des Anspruches 1.

Bei einem elektrisch betriebenen zweispurigen Fahrzeug kann eine rechtwinklige Traktionsbatterie von fahrzeugunten in einen bodenseitig offenen Montageraum eingesetzt werden. Der Batterie-Montageraum kann in der Fahrzeuglängsrichtung von vorderen und hinteren Batteriequerträgern begrenzt sein und in der Fahrzeugquerrichtung durch seitliche Schweller begrenzt sein, die die vorderen/hintere Batteriequerträger miteinander verbinden. Die Traktionsbatterie kann an ihrem Batteriegehäuse einen umlaufenden Gehäuseflansch aufweisen. Bei in den karosserieseitigen Montageraum eingesetzter Traktionsbatterie ist der Batterie-Gehäuseflansch an die Unterseite der Schweller und an die Unterseite der vorderen/hinteren Batteriequerträger verschraubt.

In einer Karosseriestruktur ist an jeder Fahrzeugseite im Vorderwagenbereich ein vorderer Karosserie-Längsträger angeordnet, der in der Fahrzeuglängsrichtung nach fahrzeughinten in den jeweiligen Schweller übergeht. Die jeweils vordere Batterieecke der Traktionsbatterie ist von einem rechtwinkligen Inneneckbereich eingefasst, der zwischen dem Schweller und dem vorderen Batteriequerträger aufgespannt ist.

Im Hinblick auf eine im Frontalcrashfall bauteilsteife Karosseriestruktur können im Stand der Technik der vordere Karosserie-Längsträger und der nach fahrzeughinten anschließende Schweller in Längsflucht verlaufen. Auf diese Weise ergibt sich im Frontalcrashfall eine crashgünstige Kraftübertragung von der Fahrzeugfront zum crashabgewandten Fahrzeugheck, und zwar unter weitgehender kräftemäßiger Entlastung der crashsensiblen Traktionsbatterie. Allerdings ist in diesem Fall die Traktionsbatterie in der Fahrzeugquerrichtung vergleichsweise schmal mit entsprechend reduzierter Batteriekapazität bemessen.

Aus der US 2013/088044 A1 ist eine gattungsgemäße Karosseriestruktur für ein elektrisch betriebenen Fahrzeug bekannt. Aus der US 9 296 426 B2, aus der US 2009/146462 A1, aus der US 7 469 957 B1 und aus der US 2014/338999 A1 ist jeweils eine Karosseriestruktur bekannt, in der ein vorderer Karosserie-Längsträger über einen Eckknoten in den Schweller übergeht. Aus der DE 10 2013 015 531 A1 ist ein Kraftfahrzeugkarosserie-Rohbau sowie ein Herstellungsverfahren für einen solchen Rohbau bekannt. Aus der DE 10 2011 100 624 A1 ist ein Fahrzeug mit eingebauter Traktionsbatterie bekannt.

Die Aufgabe der Erfindung besteht darin, eine Karosseriestruktur für ein elektrisch betriebenes Fahrzeug bereitzustellen, bei dem einerseits im Frontalcrashfall eine Crashsicherheit bereitgestellt ist und andererseits im Vergleich zum Stand der Technik die Batteriekapazität der crashsensiblen Traktionsbatterie erhöht ist.

Die Aufgabe ist durch die Merkmale des Anspruches 1 gelöst. Bevorzugte Weiterbildungen der Erfindung sind in den Unteransprüchen offenbart.

Erfindungsgemäß sind der Schweller und der vordere Karosserie-Längsträger zueinander nicht mehr in Längsflucht ausgerichtet. Vielmehr ist erfindungsgemäß der Schweller mit Bezug auf den vorderen Karosserie-Längsträger in der Fahrzeugquerrichtung um einen Querversatz nach fahrzeugaußen versetzt. Auf diese Weise ergibt sich im Vergleich zum Stand der Technik in der Fahrzeugquerrichtung ein Bauraumgewinn für die Traktionsbatterie. Die Traktionsbatterie kann daher wesentlich breiter bemessen werden, wodurch deren Batteriekapazität erhöht ist. Um in einem Frontalcrashfall eine Crashsicherheit bereitzustellen, schließt sich an den vorderen Karosserie-Längsträger in der Fahrzeuglängsrichtung nach fahrzeughinten ein als Hohlprofil gebildeter vorderer Eckknoten an. Der vordere Hohlprofil-Eckknoten ist nach fahrzeughinten unter Aufbrauch des Querversatzes aufgeweitet und an einer Schweller-Anbindungsstelle kraftübertragend am Schweller angebunden. Auf diese Weise kann im Frontalcrashfall unter kräftemäßiger Entlastung der Traktionsbatterie die Aufprallkraft in Richtung Fahrzeugheck übertragen werden.

Erfindungsgemäß ist der vordere Karosserie-Längsträger ein im Querschnitt geschlossenes Hohlprofilteil, und zwar mit einem Längsträger-Boden, einer Längsträger-Deckwand und mit Innen- und Außenflanken. Diese verbinden den Längsträger-Boden mit der Längsträger-Deckwand. In gleicher Weise ist auch der Hohlprofil-Eckknoten gestaltet: Der Hohlprofil-Eckknoten ist ein im Querschnitt geschlossenes Hohlprofilteil, dessen Eckknoten-Boden den Längsträger-Boden nach fahrzeughinten verlängert. Gleichermaßen sind Eckknoten-Seitenflanken die Längsträger-Seitenflanken nach fahrzeughinten verlängert. Zudem verlängert eine Eckknoten-Deckwand die Längsträger-Deckwand nach fahrzeughinten. In diesem Fall kann der nach fahrzeughinten offene Hohlraum des Hohlprofil-Eckknotens durch ein Querschottblechteil des vorderen Batteriequerträgers abgeschlossen sein.

In gängiger Praxis verlaufen die beiden vorderen Karosserie-Längsträger in einer oberen Längsträgerebene, während die Schweller sowie die zwischengeordnete Traktionsbatterie in einer unteren Fahrzeugebene positioniert sind. Vor diesem Hintergrund kann der Eckknoten-Boden aufgeteilt sein in ein fahrzeughinteres sowie fahrzeugunteres Bodensegment, an dem die Traktionsbatterie von fahrzeugunten anschraubbar ist, und in ein fahrzeugvorderes sowie fahrzeugoberes Bodensegment, das an dem Längsträger-Boden angebunden ist. Die beiden zueinander höhenversetzten Bodensegmente des Eckknoten-Bodens können über ein nach fahrzeughinten schräg nach unten verlaufendes Mittelsegment ineinander übergehen.

Im Hinblick auf eine einwandfreie Verlegung von Versorgungsleitungen vom Vorderwagenbereich zur Traktionsbatterie ist es bevorzugt, wenn die beiden Hohlprofil-Eckknoten nicht über einen in der Fahrzeugquerrichtung durchgängig verlaufenden Batteriequerträger verbunden sind, sondern vielmehr die beiden vorderen Hohlprofil-Eckknoten über einen fensterartigen Versorgungs-Zugang in der Fahrzeuquerrichtung voneinander beabstandet sind. Durch den Versorgungs-Zugang können diverse Versorgungsleitungen zur Traktionsbatterie geführt werden.

Um dennoch eine ausreichende Bauteilsteifigkeit in der Fahrzeugquerrichtung bereitzustellen, ist es bevorzugt, wenn die Eckknoten-Deckwand jedes Hohlprofil-Eckknotens Bestandteil eines Fußraumquerträger-Blechteils ist, das in der Fahrzeugquerrichtung sich durchgängig unterbrechungsfrei erstreckt. Das Fußraumquerträger-Blechteil begrenzt den Fahrgastzellen-Fußraum nach fahrzeugvorne. Zudem kann das Fußraumquerträger-Blechteil den fensterartigen Versorgungs-Zugang oberseitig überbrücken, während der Versorgungs-Zugang nach fahrzeugunten offen bleibt.

In einem Frontalcrashfall bildet sich ein Batterie-Lastpfad, in dem der vordere Karosserie-Längsträger, der als Schubfeld wirkende Eckknoten-Boden und das Querschottblechteil des Batteriequerträgers eingebunden sind. Zur Aussteifung des Batterie-Lastpfads kann im Hohlraum des Hohlprofil-Eckknotens ein Schottblechteil bereitgestellt sein. Das Schottblechteil kann in etwa in Längsflucht zum vorderen Längsträger positioniert sein und über Befestigungspunkte (Schweißpunkte) am Eckknoten-Boden und an der Eckknoten-Deckwand angebunden sein.

Parallel zum Batterie-Lastpfad kann sich im Frontalcrashfall zusätzlich ein Schweller-Lastpfad bilden, in dem der vordere Karosserie-Längsträger, der als Schubfeld wirkende Eckknoten-Boden, die Eckknoten-Außenflanke und der Schweller eingebunden sind. Zur Aussteifung des Schweller-Lastpfads ist es bevorzugt, wenn im Hohlraum des Hohlprofil-Eckknotens ein Verstärkungsblechteil angeordnet ist. Das Verstärkungsblechteil kann unter Bildung eines Hohlträgers am Eckknoten-Boden, am Querschottblechteil des Batteriequerträgers und an der Eckknoten-Außenflanke kraftübertragend (zum Beispiel durch Schweißpunkte) angebunden sein. Zudem kann im Hinblick auf eine einwandfreie Kraftübertragung das Verstärkungsblechteil gegenüber der Eckknoten-Deckwand anbindungsfrei bleiben.

Erfindungsgemäß ist der Hohlprofil-Eckknoten nach fahrzeughinten an der Schweller-Anbindungsstelle kraftübertragend direkt am Schweller angebunden. Nachfolgend wird eine konstruktiv einfache sowie bauteilsteife Realisierung der Schweller-Anbindungsstelle dargelegt: So kann das fahrzeughintere sowie fahrzeuguntere Bodensegment des Eckknoten-Bodens in der Fahrzeugquerrichtung nach fahrzeugaußen mit einem Fügeabschnitt verlängert sein. Der Fügeabschnitt des fahrzeughinteren/fahrzeugunteren Bodensegmentes untergreift eine Schweller-Unterseite und ist mit dieser (zum Beispiel über eine Schweißverbindung) verbunden. Sowohl das fahrzeughintere/fahrzeuguntere Bodensegment als auch das fahrzeugvordere/fahrzeugobere Bodensegment ist ebenflächig horizontal ausgebildet, während das zwischengeordnete Mittelsegment sich in Schräglage zwischen den beiden Bodensegmenten erstreckt.

Zudem kann zur Realisierung der Schweller-Anbindungstelle die Eckknoten-Außenflanke in der Fahrzeugquerrichtung nach fahrzeugaußen mit einem Schwellerabschlussteil verlängert sein. An dem Schwellerabschlussteil der Eckknoten-Außenflanke kann der Schweller nach fahrzeugvorne kraftübertragend abschließen.

Nachfolgend ist ein Ausführungsbeispiel der Erfindung anhand der beigefügten Figuren beschrieben.

Es zeigen:
- Fig. 1: in einer perspektivischen Teilansicht eine Karosseriestruktur eines zweispurigen Kraftfahrzeugs;
- Fig. 2: in einer perspektivischen Ansicht eine Traktionsbatterie in Alleinstellung;
- Fig. 3: in perspektivischer Ansicht von unten einen Unterbau der Karosseriestruktur mit demontierter Traktionsbatterie;
- Fig. 4 bis 7: jeweils unterschiedliche Ansichten des Hohlprofil-Eckknotens;
- Fig. 8: eine Eckknoten-Deckwand in Alleinstellung;
- Fig. 9: in einer Explosionsdarstellung den Unterbau der Karosseriestruktur im Vorderwagenbereich;
- Fig. 10: einen Eckknoten-Boden in Alleinstellung;

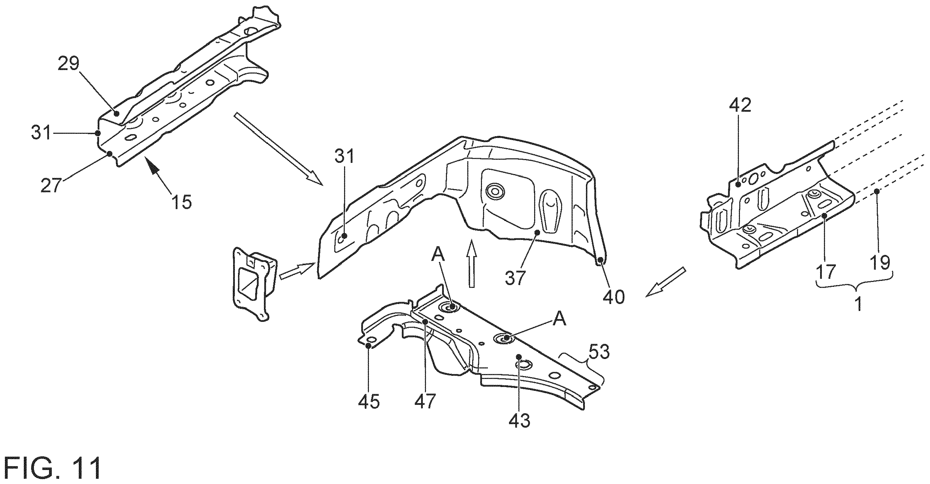

- Fig. 11: Bestandteile des Eckknotens in einer Explosionsdarstellung.

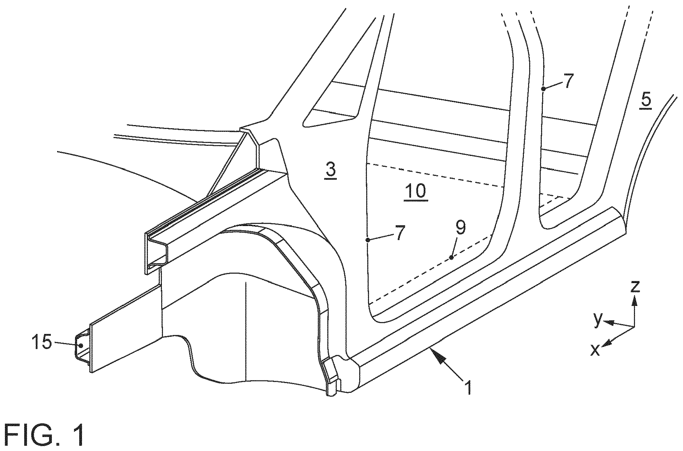

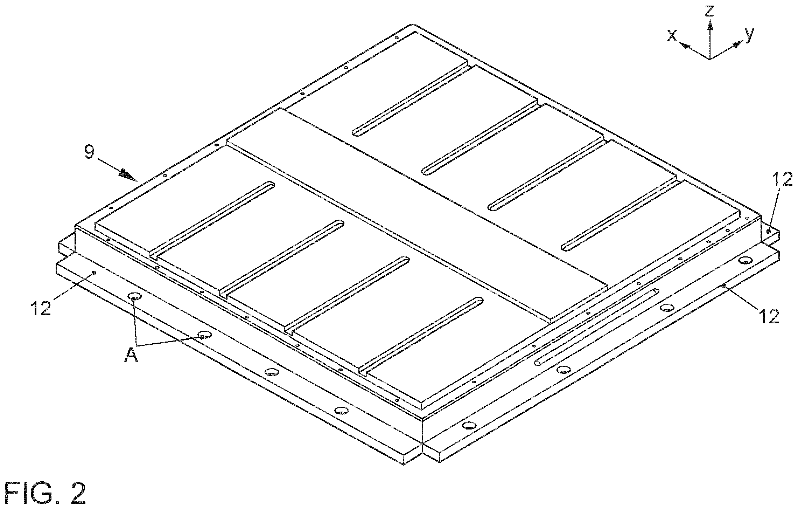

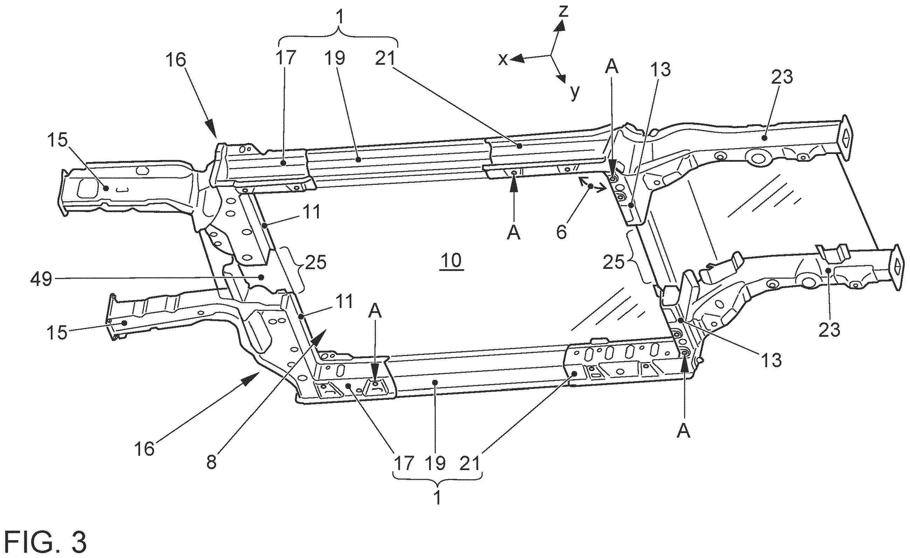

In der Fig. 1 ist eine Karosseriestruktur eines zweispurigen Fahrzeugs gezeigt, die nachfolgend insoweit beschrieben ist, als es für das Verständnis der Erfindung erforderlich ist. Demzufolge weist die Karosseriestruktur zwei seitliche, in der Fahrzeuglängsrichtung x verlaufende Schweller 1 auf, von denen in der Fig. 1 lediglich einer gezeigt ist. Der Schweller 1 erstreckt sich in der Fahrzeuglängsrichtung x zwischen einer vorderen A-Säule 3 sowie einer hinteren C-Säule 5 und begrenzt bodenseitig Seitentüröffnungen 7. Im Fahrzeugboden der Karosseriestruktur ist eine crashsensible Traktionsbatterie 9 (Fig. 2) verbaut. Diese ist unterhalb eines Bodenblechteils 10 (Fig. 3) in einem Montageraum 8 (Fig. 3) positioniert. Der Montageraum 8 erstreckt sich in der Fahrzeugquerrichtung y zwischen den beiden Schwellern 1. In der Fahrzeuglängsrichtung x erstreckt sich der Montageraum 8 zwischen einem vorderen Batteriequerträger 11 und einem hinteren Batteriequerträger 13. In der Fig. 2 weist die Traktionsbatterie 9 einen umlaufenden Gehäuseflansch 12 auf, der über Schraubpunkte A an die Unterseite der Schweller 1 sowie der Batteriequerträger 11, 13 verschraubbar ist.

Wie aus der Fig. 3 hervorgeht, verläuft im Vorderwagenbereich der Karosseriestruktur an jeder Fahrzeugseite ein vorderer Karosserie-Längsträger 15, der in der Fahrzeuglängsrichtung x nach fahrzeughinten unter Zwischenschaltung eines Hohlprofil-Eckknotens 16 in den jeweiligen Schweller 1 übergeht.

In der Fig. 3 ist der Schweller 1 in der Fahrzeuglängsrichtung x mehrteilig aufgebaut, und zwar mit einem vorderen Verbindungselement 17, einem mittleren Abschnitt 19 sowie einem hinteren Verbindungselement 21, an dem ein hinterer Karosserie-Längsträger 23 anschließt. Zudem ist in den Figuren lediglich ein Innenteil des Schwellers 1 gezeigt, während ein Schweller-Außenteil weggelassen ist. In der Fig. 3 ist der vordere sowie der hintere Batteriequerträger 11, 13 in der Fahrzeugquerrichtung y nicht komplett durchgängig ausgebildet, sondern vielmehr fahrzeugmittig mit einem Versorgungs-Zugang 25 unterbrochen, durch den nicht gezeigte Versorgungsleitungen verlegbar sind.

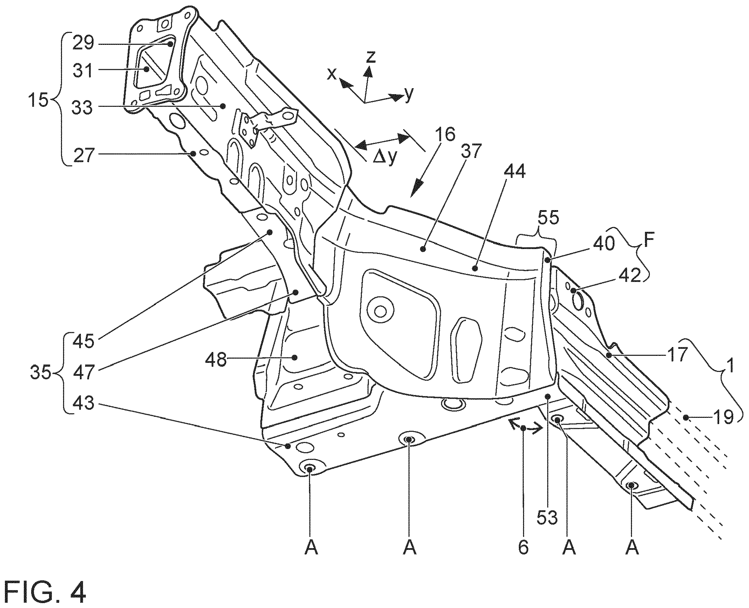

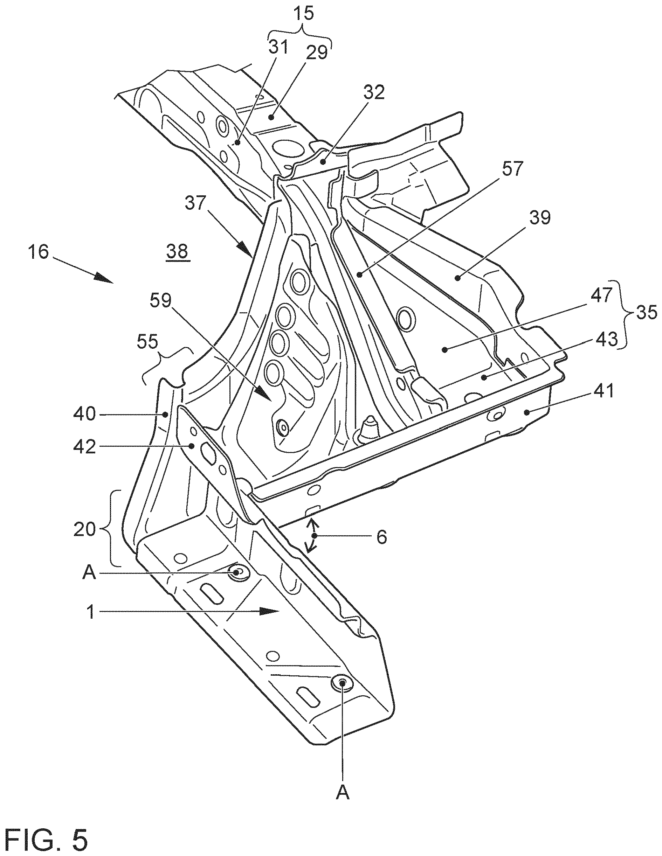

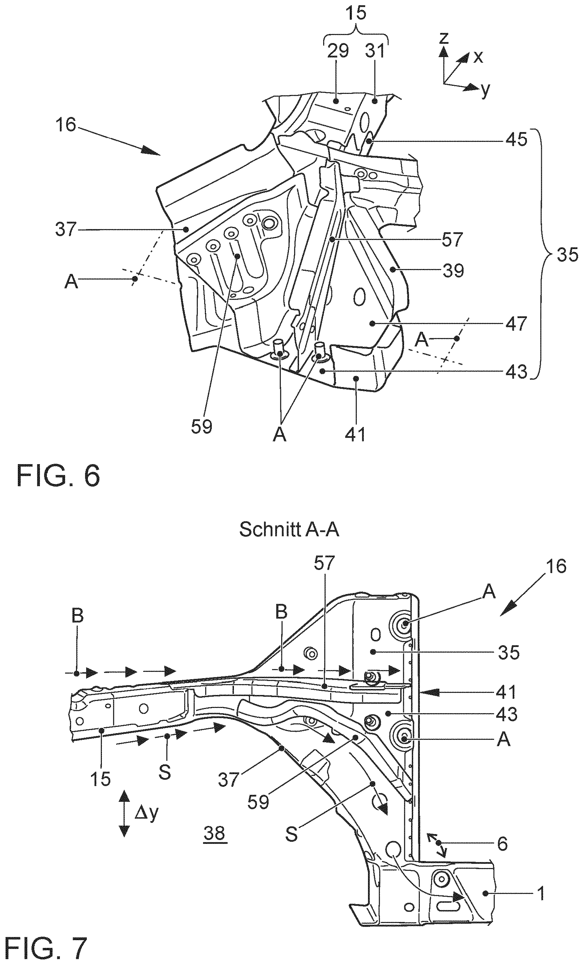

Im Hinblick auf eine Bauraum-Vergrößerung für die Traktionsbatterie ist an jeder Fahrzeugseite der Schweller 1 gegenüber dem vorderen Karosserie-Längsträger 15 in der Fahrzeugquerrichtung y um einen Querversatz Δy (Fig. 4 und 7) nach fahrzeugaußen versetzt. Um im Frontcrashfall dennoch eine kraftübertragende Verbindung zwischen dem vorderen Karosserie-Längsträger 15 und dem Schweller 1 zu erhalten, wird der Querversatz Δy mittels des zwischengeschalteten Hohlprofil-Eckknotens 16 überbrückt; der Hohlprofil-Eckknoten 16 weitet sich ausgehend vom vorderen Karosserie-Längsträger 15 nach fahrzeughinten unter Aufbrauch des Querversatzes Δy in der Fahrzeugquerrichtung y aus. Auf diese Weise ist in der Schweller-Anbindungsstelle 20 (Fig. 5) eine verbindungssteife kraftübertragende Anbindung des vorderen Karosserie-Längsträgers 15 am Schweller 1 realisiert.

Wie zum Beispiel aus der Fig. 1 oder 4 hervorgeht, ist der vordere Karosserie-Längsträger 15 ein im Querschnitt geschlossenes Hohlprofilteil mit einem Längsträger-Boden 27, einer Längsträger-Deckwand 29 sowie einer Innenflanke 31 und einer Außenflanke 33, die den Längsträger-Boden 27 mit der Längsträger-Deckwand 29 verbinden.

In gleicher Weise ist auch der Hohlprofil-Eckknoten 16 als ein im Querschnitt geschlossenes Hohlprofilteil realisiert. Dessen Eckknoten-Boden 35 verlängert den Längsträger-Boden 27 nach fahrzeughinten. Gleichermaßen verlängern die Eckknoten-Seitenflanken 37, 39 die Längsträger-Seitenflanken 31, 33 nach fahrzeughinten. Zudem verlängert eine Eckknoten-Deckwand 41 die Längsträger-Deckwand 29 ebenfalls nach fahrzeughinten. Der so gebildete Hohlraum des Hohlprofil-Eckknotens 16 ist nach fahrzeughinten durch ein Querschottblechteil 41 (zum Beispiel Fig. 5) des vorderen Batteriequerträgers 11 abgeschlossen. Das Querschottblechteil 11 begrenzt den Batterie-Montageraum 8 und spannt mit dem Schweller 1 einen Inneneckbereich 6 auf, der eine Batterieecke einfasst.

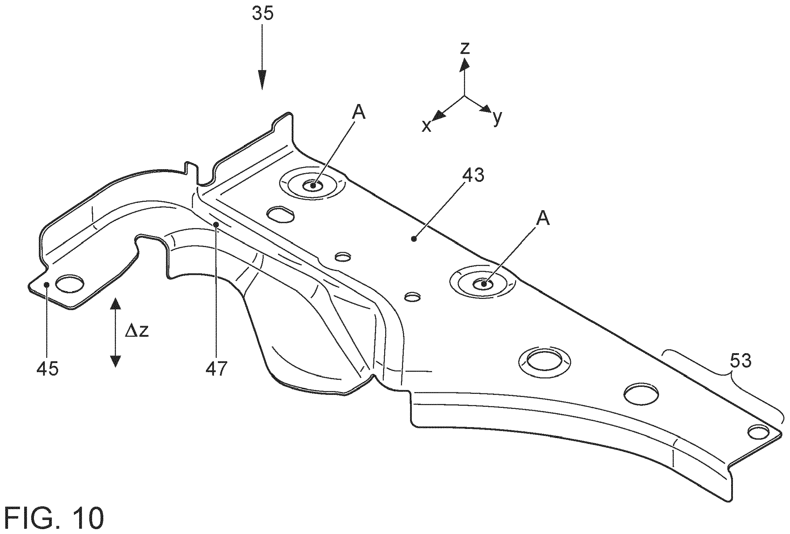

Gemäß der Fig. 4 oder 10 ist der Eckknoten-Boden 35 aufgeteilt in ein fahrzeughinteres/fahrzeugunteres Bodensegment 43 und in ein fahrzeugvorderes/fahrzeugoberes Bodensegment 45. Das fahrzeughintere/fahrzeuguntere Bodensegment 43 erstreckt sich horizontal ebenflächig und weist Schraubpunkte A zur Anbindung der Traktionsbatterie 9 auf. Das fahrzeugvordere/fahrzeugobere Bodensegment 45 des Eckknoten-Bodens 35 ist im Zusammenbauzustand am Längsträger-Boden 27 (zum Beispiel durch Schweißung) angebunden. Die beiden Bodensegmente 43, 45 des Eckknoten-Bodens 35 sind in der Fig. 10 über einen Höhenversatz Δz zueinander höhenversetzt und gehen an einem schräggestellten Mittelsegment 47 ineinander über.

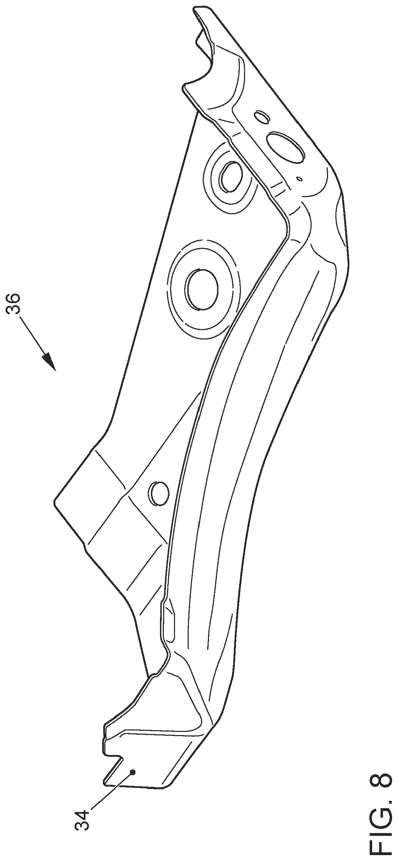

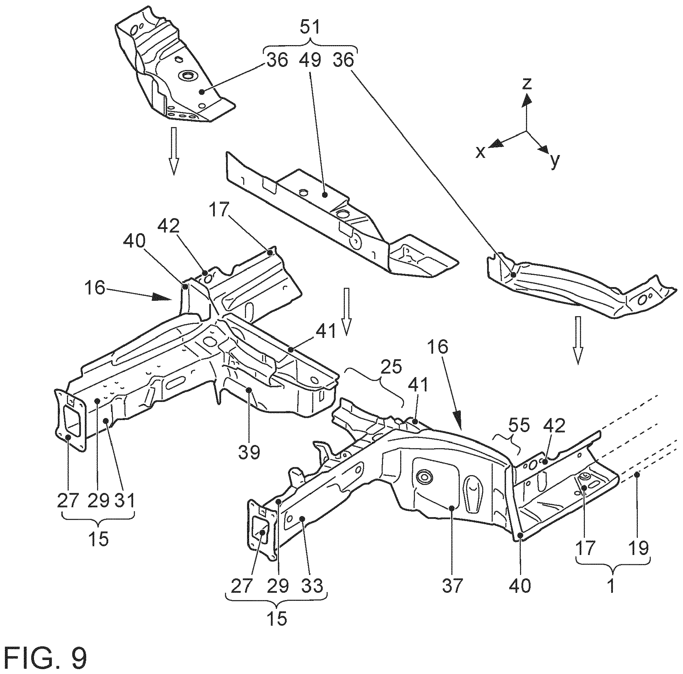

In den Fig. 5 bis 7 ist der Hohlprofil-Eckknoten 16 ohne Eckknoten-Deckwand 36 gezeigt. Diese ist in der Fig. 8 in Alleinstellung gezeigt sowie in der Fig. 9 als Bestandteil einer Explosionsdarstellung gezeigt. In der Fig. 9 sind die beiden Eckknoten-Deckwände 36 zusammen mit einem mittleren Blechteil 49 Bestandteil eines Fußraumquerträger-Blechteils 51. Das Fußraumquerträger-Blechteil 51 begrenzt einen Fahrgastzellen-Fußraum nach fahrzeugvorne. Im Zusammenbauzustand erstreckt sich das Fußraumquerträger-Blechteil 51 durchgängig über die gesamte Fahrzeugbreite. Auf diese Weise überbrückt das Fußraumquerträger-Blechteil 51 mit seinem mittleren Blechteil 49 (Fig. 3 oder 9) den fensterartigen Versorgungs-Zugang 25 oberseitig, während der Versorgungs-Zugang 25 nach fahrzeugunten offen bleibt. Gemäß der Fig. 8 weist die Eckknoten-Deckwand an ihrem fahrzeugvorderen Ende einen Fügeflansch 34 auf, der im Zusammenbauzustand mit einem korrespondierenden Fügeflansch 32 (Fig. 5) der Längsträger-Deckwand 29 verschweißt ist.

Wie aus der Fig. 5 weiter hervorgeht, weisen sowohl die Eckknoten-Außenflanke 37 als auch der Schweller 1 Randflansche 40, 42 auf. Die Randflansche 40, 42 liegen in einer gemeinsamen vertikalen Fügeebene, die eine Plattformgrenze darstellt. An den beiden Randflanschen 40, 42 ist das nicht gezeigte Schweller-Außenteil anbindbar.

Eine im Frontcrashfall verbindungssteife Ausbildung der Schweller-Anbindungsstelle 20 (Fig. 5) ist von besonderer Bedeutung. Zur Realisierung der Schweller-Anbindungsstelle 20 ist das fahrzeughintere/fahrzeuguntere Bodensegment 43 des Eckknoten-Bodens 35 in der Fahrzeugquerrichtung y nach fahrzeugaußen mit einem Fügeabschnitt 53 (Fig. 4 oder 10) verlängert. Der Fügeabschnitt 53 des Eckknoten-Bodens 35 untergreift die Schweller-Unterseite und ist mit dieser kraftübertragend (zum Beispiel durch Schweißverbindung) verbunden. Zudem ist die Eckknoten-Außenflanke 37 an einer Übergangskante 44 (Fig. 4) in der Fahrzeugquerrichtung y nach fahrzeugaußen mit einem Schwellerabschlussteil 55 verlängert. In der Fig. 4 oder 5 schließt der Schweller 1 nach fahrzeugvorne unmittelbar kraftübertragend an dem Schwellerabschlussteil 55 der Eckknoten-Außenflanke 37 ab.

Im Frontalcrashfall bildet sich gemäß der Fig. 7 ein Batterie-Lastpfad B. In dem Batterie-Lastpfad B sind der vordere Karosserie-Längsträger 15, der als Schubfeld wirkende Eckknoten-Boden 35 und das Querschottblechteil 41 des vorderen Batteriequerträgers 11 eingebunden. Zur Aussteifung des Batterie-Lastpfads B ist im Hohlraum des Hohlprofil-Eckknotens 16 ein Schottblechteil 57 bereitgestellt. Das Schottblechteil 57 erstreckt sich in Längsflucht zum vorderen Längsträger 15. Zudem ist das Schottblechteil 57 über Schweißpunkte sowohl am Eckknoten-Boden 35 als auch an der Eckknoten-Deckwand 36 angebunden.

Zusätzlich bildet sich im Frontalcrashfall ein Schweller-Lastpfad S (Fig. 7). Im Schweller-Lastpfad S sind der vordere Längsträger 15, der als Schubfeld wirkende Eckknoten-Boden 35, die Eckknoten-Außenflanke 37 und der Schweller 1 eingebunden. Zur Aussteifung des Schweller-Lastpfads S ist im Hohlraum des Hohlprofil-Eckknotens 16 ein Verstärkungsblechteil 59 angeordnet. Das Verstärkungsblechteil 59 ist unter Bildung eines Hohlträgers sowohl am Eckknoten-Boden 35, am Querschottblechteil 41 des vorderen Batteriequerträgers 11 als auch an der Eckknoten-Außenflanke 37 durch Schweißpunkte kraftübertragend angebunden.

### Bezugszeichenliste

- 1: Schweller
- 3: A-Säule
- 5: C-Säule
- 6: Inneneckbereich
- 7: Seitentüröffnung
- 8: Montageraum
- 9: Traktionsbatterie
- 10: Bodenblechteil
- 11: vorderer Batteriequerträger
- 12: Gehäuseflansch
- 13: hinterer Batteriequerträger
- 15: Karosserie-Längsträger
- 16: Hohlprofil-Eckknoten
- 17: vorderes Verbindungselement
- 19: Mittelteil
- 20: Schweller-Anbindungsstelle
- 21: hinteres Verbindungselement
- 23: hinterer Karosserie-Längsträger
- 25: Versorgungs-Zugang
- 27: Längsträger-Boden
- 29: Längsträger-Deckwand
- 31: Längsträger-Innenflanke
- 33: Längsträger-Außenflanke
- 35: Eckknoten-Boden
- 36: Eckknoten-Deckwand
- 37, 39: Eckknoten-Seitenflanken
- 38: Radraum
- 40: Randflansch der Eckknoten-Außenflanke
- 41: Querschottblechteil
- 42: Randflansch des Schwellers
- 43: hinteres Bodensegment
- 44: gerundete Übergangskante
- 45: vorderes Bodensegment
- 47: Mittelsegment
- 48: Fahrwerk-Befestigungskonsole
- 49: mittleres Blechteil
- 51: Fußraumquerträger-Blechteil
- 53: Fügeabschnitt
- 55: Schweller-Abschlussteil
- 57: Schottblechteil
- 59: Verstärkungsblechteil
- Δy: Querversatz
- Δz: Höhenversatz
- A: Traktionsbatterie-Anbindungspunkte
- S: Schweller-Lastpfad
- B: Batterie-Lastpfad

## Patentansprüche

1. Karosseriestruktur für ein elektrisch betriebenes Fahrzeug, mit einem in der Fahrzeughochrichtung (z) nach fahrzeugunten offenen Montageraum (8) für eine Traktionsbatterie (9), der nach fahrzeugoben von einem, den Fahrzeugboden bildenden Bodenblechteil (10) begrenzt ist, und in der Fahrzeugquerrichtung (y) beidseitig durch einen Schweller (1) begrenzt ist, der eine Seitentüröffnung (7) nach fahrzeugunten begrenzt, wobei an jeder Fahrzeugseite im Vorderwagenbereich ein vorderer Karosserie-Längsträger (15) verläuft, der in der Fahrzeuglängsrichtung (x) nach fahrzeughinten in den jeweiligen Schweller (1) übergeht, wobei die jeweils vordere Batterieecke der Traktionsbatterie (9) von einem Inneneckbereich (6) eingefasst ist, der zwischen dem Schweller (1) und einem vorderen Batteriequerträger (11) aufgespannt ist, wobei an jeder Fahrzeugseite der Schweller (1) mit Bezug auf den vorderen Karosserie-Längsträger (15) in der Fahrzeugquerrichtung (y) um einen Querversatz (Δy) nach fahrzeugaußen versetzt ist, wobei an den vorderen Karosserie-Längsträger (15) in der Fahrzeuglängsrichtung (x) nach fahrzeughinten ein als Hohlprofil gebildeter Eckknoten (16) anschließt, der sich in der Fahrzeuglängsrichtung (x) nach fahrzeughinten unter Aufbrauch des Querversatzes (Δy) ausweitet und der an einer Schweller-Anbindungsstelle (20) kraftübertragend am Schweller (1) angebunden ist, **dadurch gekennzeichnet, dass** der vordere Längsträger (15) ein im Querschnitt geschlossenes Hohlprofilteil ist mit einem Längsträger-Boden (27), einer Längsträger-Deckwand (29) und mit Innen- und Außenflanken (31, 33), die den Längsträger-Boden (27) mit der Längsträger-Deckwand (29) verbinden, und dass der Hohlprofil-Eckknoten (16) ein im Querschnitt geschlossenes Hohlprofilteil ist, dessen Eckknoten-Boden (35) den Längsträger-Boden (27) nach fahrzeughinten verlängert, dessen Eckknoten-Seitenflanken (37, 39) die Längsträger-Seitenflanken (31, 33) nach fahrzeughinten verlängern, und dessen Eckknoten-Deckwand (36) die Längsträger-Deckwand (29) nach fahrzeughinten verlängert.

2. Karosseriestruktur nach Anspruch 1, **dadurch gekennzeichnet, dass** der Hohlraum des Hohlprofil-Eckknotens (16) nach fahrzeughinten durch ein Querschottblechteil (41) des vorderen Batteriequerträgers (11) abgeschlossen ist.

3. Karosseriestruktur nach Anspruch 2, **dadurch gekennzeichnet, dass** der Eckknoten-Boden (35) aufgeteilt ist in ein fahrzeughinteres sowie fahrzeugunteres, horizontal ebenflächiges Bodensegment (43) zur Anbindung der Traktionsbatterie (9) und in ein fahrzeugvorderes sowie fahrzeugoberes, horizontal ebenflächiges Bodensegment (45) zur Anbindung an den Längsträger-Boden (27), und dass die beiden Bodensegmente (43, 45) über einen Höhenversatz (Δz) zueinander höhenversetzt sind und/oder an einem Mittelsegment (47) ineinander übergehen.

4. Karosseriestruktur nach einem der vorhergehenden Ansprüche, **dadurch gekennzeichnet, dass** die beiden vorderen Hohlprofil-Eckknoten (16) mit Bezug auf eine Fahrzeug-Mittellängsebene spiegelbildlich ausgebildet sind, und/oder über einen fensterartigen Versorgungs-Zugang (25) in der Fahrzeugquerrichtung (y) voneinander beabstandet sind.

5. Karosseriestruktur nach einem der Ansprüche 1 bis 4, **dadurch gekennzeichnet, dass** die Eckknoten-Deckwand (36) Bestandteil eines Fußraumquerträger-Blechteils (51) ist, das den Fahrgastzellen-Fußraum nach fahrzeugvorne begrenzt.

6. Karosseriestruktur nach den Ansprüchen 4 und 5, **dadurch gekennzeichnet, dass** das Fußraumquerträger-Blechteil (51) sich durchgängig über die gesamte Fahrzeugbreite erstreckt, und dass das Fußraumquerträger-Blechteil (51) den fensterartigen Versorgungs-Zugang (25) oberseitig überbrückt, und/oder dass der Versorgungs-Zugang (25) nach fahrzeugunten offen ist.

7. Karosseriestruktur nach Anspruch 2, **dadurch gekennzeichnet, dass** in einem Frontalcrashfall sich ein Batterie-Lastpfad (B) bildet, in dem der vordere Längsträger (15), der als Schubfeld wirkende Eckknoten-Boden (35) und das Querschottblechteil (41) des vorderen Batteriequerträgers (11) eingebunden sind, und dass zur Aussteifung des Batterie-Lastpfads (B) im Hohlraum des Hohlprofil-Eckknotens (16) ein Schottblechteil (57) bereitgestellt ist, und dass sich das Schottblechteil (57) in Längsflucht zum vorderen Längsträger (15) erstreckt und/oder über Befestigungspunkte sowohl am Eckknoten-Boden (35) als auch an der Eckknoten-Deckwand (36) angebunden ist.

8. Karosseriestruktur nach Anspruch 2, **dadurch gekennzeichnet, dass** in einem Frontalcrashfall sich ein Schweller-Lastpfad (S) bildet, in dem der vordere Längsträger (15), der als Schubfeld wirkende Eckknoten-Boden (35), die äußere Eckknoten-Seitenflanke (37) und der Schweller (1) eingebunden sind, und dass zur Aussteifung des Schweller-Lastpfads (S) im Hohlraum des Hohlprofil-Eckknotens (16) ein Verstärkungsblechteil (59) angeordnet ist, und dass das Verstärkungsblechteil (59) unter Bildung eines Hohlträgers am Eckknoten-Boden (35), am Querschottblechteil (41) des vorderen Batteriequerträgers (11) und an der äußeren Eckknoten-Seitenflanke (37) kraftübertragend angebunden ist, und dass das Verstärkungsblechteil (59) anbindungsfrei gegenüber der Eckknoten-Deckwand (36) ist.

9. Karosseriestruktur nach Anspruch 3, **dadurch gekennzeichnet, dass** das fahrzeughintere sowie fahrzeuguntere Bodensegment (43, 45) des Eckknoten-Bodens (35) in der Fahrzeugquerrichtung (y) nach fahrzeugaußen mit einem Fügeabschnitt (53) verlängert ist, der den Schweller (1) untergreift und mit diesem kraftübertragend verbunden ist.

10. Karosseriestruktur nach einem der Ansprüche 1 bis 9, **dadurch gekennzeichnet, dass** die äußere Eckknoten-Seitenflanke (37) einen Radraum (38) eines frontseitigen Radhauses in der Fahrzeugquerrichtung (y) nach fahrzeuginnen begrenzt, und dass die äußere Eckknoten-Seitenflanke (37) nach fahrzeughinten an einer Übergangskante (40) in ein Schwellerabschlussteil (55) übergeht, das den Radraum (38) nach fahrzeughinten begrenzt, und dass an dem Schwellerabschlussteil (55) der Schweller (1) nach fahrzeugvorne abschließt.

## Claims

1. A body structure for an electrically operated vehicle, having an assembly space (8) for an electric vehicle battery (9) which is open toward the bottom of the vehicle in the vehicle vertical direction (z), is delimited toward the top of the vehicle by a floor panel (10) forming the vehicle floor, and is delimited on both sides in the vehicle transverse direction (y) by a sill (1) which delimits a side door opening (7) toward the bottom of the vehicle, a front body longitudinal member (15) extending on each side of the vehicle in the front-end region which merges into the corresponding sill (1) toward the rear of the vehicle in the vehicle longitudinal direction (x), wherein each of the front battery corners of the electric vehicle battery (9) is surrounded by an inner corner region (6) which spans between the sill (1) and a front battery cross member (11), the sill (1) is offset with respect to the front body longitudinal member (15) on either side of the vehicle by a transverse offset (Δy) toward the outside of the vehicle in the vehicle transverse direction (y), a corner node (16) formed as a hollow profile adjoins the front body longitudinal member (15) toward the rear of the vehicle in the vehicle longitudinal direction (x), which node widens in the vehicle longitudinal direction (x) toward the rear of the vehicle using up the transverse offset (Δy) and which is connected to the sill (1) at a sill connection point (20) so as to transmit force,
**characterized in that** the front longitudinal member (15) is a hollow profile part comprising a closed cross section and having a longitudinal member base (27), a longitudinal member top wall (29) and inner and outer flanks (31, 33) which connect the longitudinal member base (27) to the longitudinal member top wall (29), and **in that** the hollow profile corner node (16) is a hollow profile part with a closed cross section, the corner node base (35) of which extends the longitudinal member base (27) toward the rear of the vehicle, the corner node lateral flanks (37, 39) of which extend the longitudinal member lateral flanks (31, 33) toward the rear of the vehicle, and whose corner node top wall (36) extends the longitudinal member top wall (29) toward the rear of the vehicle.

2. The body structure according to claim 1, **characterized in that** the cavity of the hollow profile corner node (16) is closed off toward the rear of the vehicle by a transverse bulkhead panel (41) of the front battery cross member (11).

3. The body structure according to claim 2, **characterized in that** the corner node base (35) is divided into a horizontally planar base segment (43) at the rear and bottom of the vehicle for connecting the electric vehicle battery (9), and into a horizontally planar base segment (45) at the front and top of the vehicle for connecting to the longitudinal member base (27), and **in that** the two base segments (43, 45) are vertically offset from one another by a vertical offset (Δz) and/or merge into one another at a central segment (47).

4. The body structure according to any one of the preceding claims,
**characterized in that** the two front hollow profile corner nodes (16) are mirror-inverted with respect to a vehicle central longitudinal plane and/or are spaced apart from one another in the vehicle transverse direction (y) via a window-like supply entrance (25).

5. The body structure according to any one of claims 1 to 4,
**characterized in that** the corner node top wall (36) is part of a footwell cross member panel (51) which delimits the passenger compartment footwell toward the front of the vehicle.

6. The body structure according to claims 4 and 5, **characterized in that** the footwell cross member panel (51) extends continuously over the entire vehicle width, and **in that** the footwell cross member panel (51) bridges the window-like supply entrance (25) at the top, and/or **in that** the supply entrance (25) is open toward the bottom of the vehicle.

7. The body structure according to claim 2, **characterized in that** in the event of a head-on collision, a battery load path (B) is formed in which the front longitudinal member (15), the corner node base (35) acting as a shear panel and the transverse bulkhead panel (41) of the front battery cross member (11) are integrated, and **in that** a bulkhead panel (57) is provided in the cavity of the hollow profile corner node (16) to stiffen the battery load path (B), and **in that** the bulkhead panel (57) extends in longitudinal alignment with the front longitudinal member (15) and/or is connected via fastening points both to the corner node base (35) and to the corner node top wall (36).

8. The body structure according to claim 2, **characterized in that** in the event of a head-on collision, a sill load path (S) is formed in which the front longitudinal member (15), the corner node base (35) acting as a shear panel, the outer corner node lateral flank (37) and the sill (1) are integrated, and **in that** a reinforcing panel (59) is arranged in the cavity of the hollow profile corner node (16) to stiffen the sill load path (S), and **in that** the reinforcing panel (59) is connected to the corner node base (35), to the transverse bulkhead panel (41) of the front battery cross member (11) and to the outer corner node lateral flank (37) so as to transmit force and thereby forming a hollow member, and **in that** the reinforcing panel (59) is not connected to the corner node top wall (36).

9. The body structure according to claim 3, **characterized in that** the base segment (43, 45) of the corner node base (35) that is at the back and bottom of the vehicle is extended in the vehicle transverse direction (y) toward the outside of the vehicle by a joining portion (53) which engages under the sill (1) and is connected thereto so as to transmit force.

10. The body structure according to any one of claims 1 to 9,
**characterized in that** the outer corner node lateral side (37) delimits a wheel space (38) of a front wheel house toward the inside of the vehicle in the vehicle transverse direction (y), and **in that** the outer corner node lateral side (37) merges into a sill end part (55) at a transition edge (40) toward the rear of the vehicle, which end part delimits the wheel space (38) toward the rear of the vehicle, and **in that** the sill (1) terminates at the sill end part (55) toward the front of the vehicle.

## Revendications

1. Structure de carrosserie pour un véhicule à fonctionnement électrique, comportant un espace de montage (8) pour une batterie de traction (9) ouvert vers le bas du véhicule dans la direction de la hauteur de véhicule (z), lequel espace de montage est délimité vers le haut du véhicule par une partie en tôle de plancher (10) formant le plancher de véhicule, et, dans la direction transversale de véhicule (y), est délimité des deux côtés par un bas de caisse (1) qui délimite une ouverture de porte latérale (7) vers le bas du véhicule, dans lequel un longeron avant de carrosserie (15) s'étend de chaque côté du véhicule dans la zone de partie avant de véhicule, lequel longeron avant, dans la direction longitudinale de véhicule (x), se confond vers l'arrière du véhicule dans le bas de caisse (1) respectif, dans lequel le coin de batterie avant respectif de la batterie de traction (9) est entouré par une zone de coin intérieur (6) qui est définie entre le bas de caisse (1) et une traverse de batterie avant (11), dans lequel, sur chaque côté du véhicule, le bas de caisse (1) est décalé vers l'extérieur du véhicule d'un décalage transversal (Δy) par rapport au longeron avant de carrosserie (15) dans la direction transversale de véhicule (y), dans lequel un noeud de coin (16) formé en tant que profilé creux se raccorde au longeron avant de carrosserie (15) dans la direction longitudinale de véhicule (x) vers l'arrière du véhicule, lequel noeud de coin s'élargit vers l'arrière du véhicule dans la direction longitudinale de véhicule (x) en utilisant le décalage transversal (Δy) et est relié au bas de caisse (1) de manière à transmettre une force au niveau d'un point de liaison de bas de caisse **(20),caractérisée en ce que** le longeron avant (15) est une pièce profilée creuse fermée en section transversale comportant un fond de longeron (27), une paroi supérieure de longeron (29) et comportant des flancs intérieur et extérieur (31, 33) qui relient le fond de longeron (27) à la paroi supérieure de longeron (29), **et en ce que** le noeud de coin de profilé creux (16) est une pièce profilée creuse fermée en section transversale, dont le fond de noeud de coin (35) prolonge le fond de longeron (27) vers l'arrière du véhicule, dont les flancs latéraux de noeud de coin (37, 39) prolongent les flancs latéraux de longeron (31, 33) vers l'arrière du véhicule, et dont la paroi supérieure de noeud de coin (36) prolonge la paroi de supérieure de longeron (29) vers l'arrière du véhicule.

2. Structure de carrosserie selon la revendication 1, **caractérisée en ce que** l'espace creux du noeud de coin de profilé creux (16) est fermé vers l'arrière du véhicule par une partie en tôle formant cloison transversale (41) de la traverse de batterie avant (11).

3. Structure de carrosserie selon la revendication 2, **caractérisée en ce que** le fond de noeud de coin (35) est divisé en un segment de fond (43) à surface plane horizontalement, situé vers l'arrière du véhicule et vers le bas du véhicule, pour la liaison à la batterie de traction (9), et en un segment de fond (45) à surface plane horizontalement, situé vers l'avant du véhicule et vers le haut du véhicule, pour la liaison au fond de longeron (27), **et en ce que** les deux segments de fond (43, 45) sont décalés en hauteur l'un par rapport à l'autre par un décalage en hauteur (Δz) et/ou se confondent l'un dans l'autre au niveau d'un segment central (47).

4. Structure de carrosserie selon l'une des revendications précédentes,
**caractérisée en ce que** les deux noeuds de coin avant de profilé creux (16) sont réalisés de manière à être symétriques en miroir par rapport à un plan longitudinal médian de véhicule et/ou sont espacés l'un de l'autre dans la direction transversale de véhicule (y) par un accès d'alimentation (25) en forme de fenêtre.

5. Structure de carrosserie selon l'une des revendications 1 à 4,
**caractérisée en ce que** la paroi supérieure de noeud de coin (36) fait partie d'une pièce en tôle de traverse d'espace pour les pieds (51) qui délimite l'espace pour les pieds de l'habitacle vers l'avant du véhicule.

6. Structure de carrosserie selon les revendications 4 et 5,
**caractérisée en ce que** la pièce en tôle de traverse d'espace pour les pieds (51) s'étend en continu sur toute la largeur du véhicule, **et en ce que** la pièce en tôle de traverse d'espace pour les pieds (51) surmonte l'accès d'alimentation (25) en forme de fenêtre sur le côté supérieur, **et/ou en ce que** l'accès d'alimentation (25) est ouvert vers l'extérieur du véhicule.

7. Structure de carrosserie selon la revendication 2, **caractérisée en ce que,** dans un cas de collision frontale, un chemin de charge de batterie (B) se forme, dans lequel sont intégrés le longeron avant (15), le fond de noeud de coin (35) agissant en tant que champ de poussée et la pièce en tôle formant cloison transversale (41) de la traverse de batterie avant (11), **et en ce que,** pour rigidifier le chemin de charge de batterie (B), une partie en tôle formant cloison (57) est fournie dans l'espace creux du noeud de coin de profilé creux (16), **et en ce que** la partie en tôle formant cloison (57) s'étend dans l'alignement longitudinal par rapport au longeron avant (15) et/ou est reliée par l'intermédiaire de points de fixation aussi bien au fond de noeud de coin (35) qu'à la paroi supérieure de noeud de coin (36).

8. Structure de carrosserie selon la revendication 2, **caractérisée en ce que,** dans un cas de collision frontale, un chemin de charge de bas de caisse (S) se forme, dans lequel sont intégrés le longeron avant (15), le fond de noeud de coin (35) agissant en tant que champ de poussée, le flanc latéral extérieur de noeud de coin (37) et le bas de caisse (1), **et en ce que,** pour rigidifier le chemin de charge de bas de caisse (S), une pièce en tôle de renforcement (59) est disposée dans l'espace creux du noeud de coin de profilé creux (16), **et en ce que** la pièce en tôle de renforcement (59) est reliée de manière à transmettre une force, en formant une poutre creuse, au fond de noeud de coin (35), à la pièce en tôle formant cloison transversale (41) de la traverse de batterie avant (11) et au flanc latéral extérieur de noeud de coin (37), **et en ce que** la pièce en tôle de renforcement (59) est exempte de liaison par rapport à la paroi supérieure de noeud de coin (36).

9. Structure de carrosserie selon la revendication 3, **caractérisée en ce que** le segment de fond (43, 45) situé vers l'arrière du véhicule et vers le bas du véhicule du fond de noeud de coin (35) est prolongé, dans la direction transversale de véhicule (y), vers l'extérieur du véhicule avec une section d'assemblage (53) qui vient en prise par le bas avec le bas de caisse (1) et est reliée à celui-ci de manière à transmettre une force.

10. Structure de carrosserie selon l'une des revendications 1 à 9,
**caractérisée en ce que** le flanc latéral extérieur de noeud de coin (37) délimite un espace de roue (38) d'un passage de roue côté avant dans la direction transversale de véhicule (y) vers l'intérieur du véhicule, **et en ce que** le flanc latéral extérieur de noeud de coin (37) se confond vers l'arrière du véhicule, au niveau d'une arête de transition (40), dans une partie de terminaison de bas de caisse (55) qui délimite l'espace de roue (38) vers l'arrière du véhicule, **et en ce que** le bas de caisse (1) se termine vers l'avant du véhicule au niveau de la partie de terminaison de bas de caisse (55).
